# EUROPEAN PATENT APPLICATION

(11) **EP 4 303 049 A1**
(43) Date of publication of application: **10.01.2024**
(21) Application number: 22183152.2
(22) Date of filing: 05.07.2022
(51) Int. Cl.: B60K 1/04, B60K 1/00

(54) **MOTOR AND TRANSMISSION ASSEMBLY FOR A VEHICLE**

(71) Applicant: Volvo Car Corporation, 40531 Göteborg (SE)
(72) Inventor: JAKTLING, Staffan, 40531 Göteborg (SE); ÅBERG, Magnus, 40531 Göteborg (SE)
(74) Representative: Maiwald GmbH

(57) **Abstract**

Motor and transmission assembly for a vehicle, comprising:
a motor unit comprising a motor housing (10);
a transmission unit comprising a transmission housing (20);
whereby the motor housing (10) and the transmission housing (20) are connected to each other by a welded joint.

## Description

### TECHNICAL FIELD

The present disclosure relates to a motor and transmission assembly for a vehicle, a vehicle comprising such an assembly and a method for providing such a motor and transmission assembly.

### BACKGROUND ART

Known motor and transmission assemblies comprising a motor housing and a transmission housing, whereby the motor housing is connected to the transmission housing with e.g. bolts and have sealing elements/gaskets to prevent leakage inside the connection. However, the use of bolts increases the weight of the engine and transmission assembly and prevents needed reinforcing elements from being arranged in an optimal manner. In addition, reinforcing elements are only designed for the motor housing or the transmission housing.

In view of this, it is found that a further need exists to provide an improved motor and transmission assembly for a vehicle.

### SUMMARY

In the view of the above, it is an object of the present disclosure to provide an improved motor and transmission assembly for a vehicle.

The problem is at least partially solved or alleviated by the subject matter of the independent claims of the present disclosure, wherein further examples are incorporated in the dependent claims.

According to a first aspect, a motor and transmission assembly for a vehicle is disclosed, comprising:
- a motor unit comprising a motor housing;
- a transmission unit comprising a transmission housing;
- whereby the motor housing and the transmission housing are connected to each other by a non-destructively detachable connection.

The motor and transmission assembly may be configured to be used in a front axle, rear axle and/or an intermediate axle of a vehicle. Further, the motor and transmission assembly may be configured to be used in an electrical front axle, an electrical rear axle and/or an electrical intermediate axle of the vehicle, whereby the electrical front axle, the electrical rear axle and/or the electrical intermediate axle may be configured to drive the vehicle.

Moreover, the motor and transmission assembly may be also configured to be arranged in a machine, for example in an axle of the machine. Further, the axle of the machine may be configured to be an electrical axle of the machine, whereby the electrical axle of the machine may be configured to power the machine.

The non-destructively detachable connection may improve noise, vibration, harshness (NVH) and/or stiffness performance of the motor and transmission assembly over the vehicle's lifespan/lifetime compared to conventional bolted joints and/or screw connections. Thus, an improvement of the NVH and/or stiffness characteristics of the motor and transmission assembly is possible, since no screw connection properties/characteristics are needed to be considered.

In addition, a non-destructively detachable connection may provide a connection between the motor housing and the transmission housing that does not require a gasket and/or seal element to prevent leakage. Therefore, the connection between the motor housing and the transmission housing does not require a clamping force to prevent leakage. Moreover, no extra pads and ribs for the connection of the motor housing and the transmission housing have to be installed/used in order to prevent leakage.

Furthermore, additional weight may be avoided by not using additional reinforcement material, screw bosses, threaded bosses and screws, resulting in a lighter motor and transmission assembly.

The motor and transmission assembly may not require any screw connections for connecting the motor housing and transmission housing. Further, the motor and transmission assembly according to the present disclosure may also not require any gasket and/or sealing element for connecting the motor housing and transmission housing.

Should it be necessary to separate the motor housing and the transmission housing, this may be done, for example, with the aid of computerized numerical control (CNC) machines.

In an implementation, the non-destructive detachable connection may be an adhesive joint and/or a glued joint and/or a soldered joint and/or a welded joint, in particular the welded joint may comprise a friction stir welding joint connecting the motor housing and the transmission housing to each other. These joint types provide sufficiently high joint stability and can be provided in practice with high manufacturing quality and low manufacturing tolerances.

The connection between the motor housing and the transmission housing may in particular be provided by a welded joint.

The welded joint may be formed by arc welding, oxyfuel welding, resistance welding, solid-state welding and/or other types of welding known from the state of art and/or DIN ISO 4063.

Therefore, if the motor housing, in particular the housing of an electric motor, and the transmission housing are welded together, for example by friction stir welding, all reinforcements around the screws and/or bolts of the motor housing and/or the transmission housing may be removed.

In an implementation, the motor housing and/or the transmission housing may comprise at least one rib element configured to reinforce the stability of the motor housing and/or the transmission housing.

In an implementation, the motor housing and/or the transmission housing may comprise at least one transversal rip element extending in a transversal direction of the motor housing and/or the transmission housing.

In an implementation, the motor housing and/or the transmission housing may comprise at least one longitudinal rip element extending in a longitudinal direction of the motor housing and/or the transmission housing.

Further, the motor housing and/or the transmission housing may comprise several standing ribbings and reinforcements to improve the stiffness of the respective housing.

Moreover, the reinforcement performance of the motor housing and/or transmission housing may be further improved by using straight reinforcements.

In an implementation, at least one longitudinal rib element of the transmission housing and at least one longitudinal rib element of the motor housing may be arranged in such a way that end faces of the longitudinal rib elements are contacting each other.

In an implementation, the end faces of the longitudinal rib elements may be connected to each other by a welded joint.

In other words, the reinforcement rib elements may meet each other between the motor housing and transmission housing, whereby the reinforcement rib elements of the motor housing and the transmission housing may be welded together to act as an integral reinforcement rib element.

In an implementation, the at least one longitudinal rib element of the transmission housing and the at least one longitudinal rib element of the motor housing may be arranged in such a way that they build a unitary longitudinal rib element to reinforce the motor and transmission assembly.

In other words, the reinforcement rib elements that may meet between the motor housing and transmission housing may be welded together to act as one reinforcement rib element for the motor and transmission assembly.

Since the reinforcement rib elements do not need to be oriented to individual screws, they may be positioned in the most efficient manner to improve the reinforcement of the engine and transmission assembly. This may also prevent excessive deflection of the reinforcement rib elements.

Furthermore, all rib elements and reinforcements may be optimized for the motor and transmission assembly, rather than being optimized for the motor housing and the transmission housing in each case individually.

In an implementation, the at least one longitudinal rib element of the transmission housing and/or the at least one longitudinal rib element of the motor housing may be formed as a straight longitudinal rib element.

In other words, omitting the cutouts for screw access may eliminate the need to re-route the rib elements, so that preferably all rib elements may be provided as straight elements.

In an implementation, beside the non-destructively detachable connection, no further connection means are provided for connecting the motor housing and the transmission housing.

A further aspect of the present disclosure relates to a vehicle comprising a motor and transmission assembly as described above, whereby the motor and transmission assembly is mounted in a frame assembly of the vehicle.

In an implementation, the frame assembly may be provided at a front axle, an intermediate axle and/or a rear axle of the vehicle.

A further aspect of the present disclosure relates to a method for providing a motor and transmission assembly as described above, the method comprising:
- providing a motor unit comprising a motor housing;
- providing a transmission unit comprising a transmission housing;
- connecting the motor housing and the transmission housing to each other with a method for forming a non-destructively detachable connection.

In an implementation, the non-destructively detachable connection may is formed by an adhesive joint and/or a glued joint and/or a soldered joint and/or a welded joint, in particular the welded joint may comprise a friction stir welding joint.

### BRIEF DESCRIPTION OF DRAWINGS

In the following, the disclosure is described exemplarily with reference to the enclosed figures, in which:
- **Fig. 1**: is a schematic illustration of an example of a motor and transmission assembly known from the prior art in a longitudinal view;
- **Fig. 2**: is a schematic illustration of a motor housing or a transmission housing according Fig. 1 known from the prior art in a side view;
- **Fig. 3**: is a schematic illustration of a first example of a disclosed motor and transmission assembly in a frame assembly in a first view;
- **Fig. 4**: is a schematic illustration of the first example of a disclosed motor and transmission assembly in a frame assembly in a second view;
- **Fig. 5a**: is a schematic illustration of a second example of a disclosed motor and transmission assembly with a ribbing structure;
- **Fig. 5b**: is a schematic illustration of an example of a motor housing and a transmission housing with a ribbing structure known from the prior art;
- **Fig. 6a**: is a schematic illustration of a first view of the motor and transmission assembly with a ribbing structure according Fig. 5a;
- **Fig. 6b**: is a schematic illustration of a second view of the motor and transmission assembly with a ribbing structure according Fig. 5a;
- **Fig. 7**: is a schematic illustration of a motor housing or a transmission housing according Fig. 3 or Fig. 4 in a side view; and
- **Fig. 8**: is an example of a method for providing a motor and transmission assembly.

Notably, the figures are merely schematic representations and serve only to illustrate examples of the present disclosure. Identical or equivalent elements are in principle provided with the same reference signs.

### DETAILED DESCRIPTION

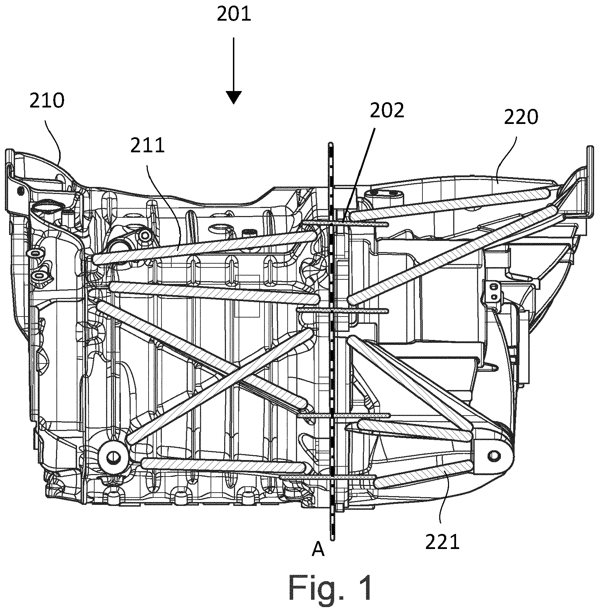

**Fig. 1** shows a schematic illustration of an example of a motor and transmission assembly 201 known from the prior art in a longitudinal view, whereby the motor and transmission assembly 201 comprises a motor unit with a motor housing 210 and a transmission unit with a transmission housing 220. The motor housing 210 and the transmission housing 220 are connected to each other with screws 202 and a connection flange, schematically shown as an axis A.

Moreover, four screws 202 are connecting the motor housing 210 to the transmission housing 220 over the flange.

The motor housing 210 comprises, for example, five longitudinal rip elements 211 and the transmission housing 220 comprises, for example, five longitudinal rip elements 221. The five longitudinal rib elements 211 and the five longitudinal rib elements 221 are each arranged between the shown screws, and the five longitudinal rib elements 211 are arranged separately from the five longitudinal rib elements 221. Moreover, the five longitudinal rib elements 211 and the five longitudinal rib elements 221 are orientated in a way to avoid screws and/or screw holes.

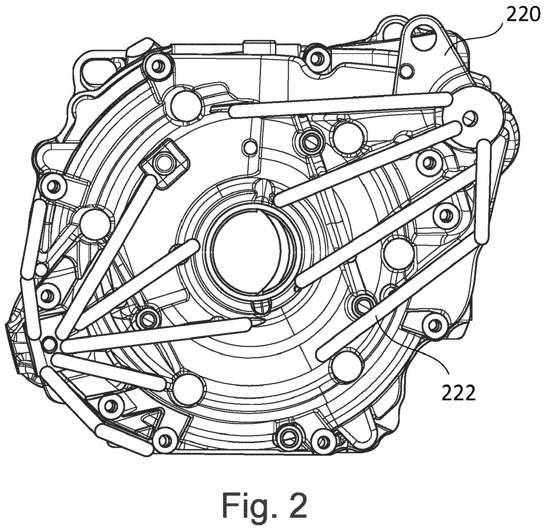

**Fig. 2** shows a schematic illustration of a motor housing or a transmission housing according **Fig. 1** known from the prior art in a side view, whereby the motor housing or the transmission housing 220 comprises, for example, ten traversal rib elements 222, whereby some of the traversal rib elements 222 are straight traversal rib elements 222 and some are odd traversal rib elements 222.

Moreover, the odd traversal ribs 222 have to avoid bolts and/or screws, which reduces the stiffening effect of the odd traversal rib elements 222 on the motor housing or transmission housing 220.

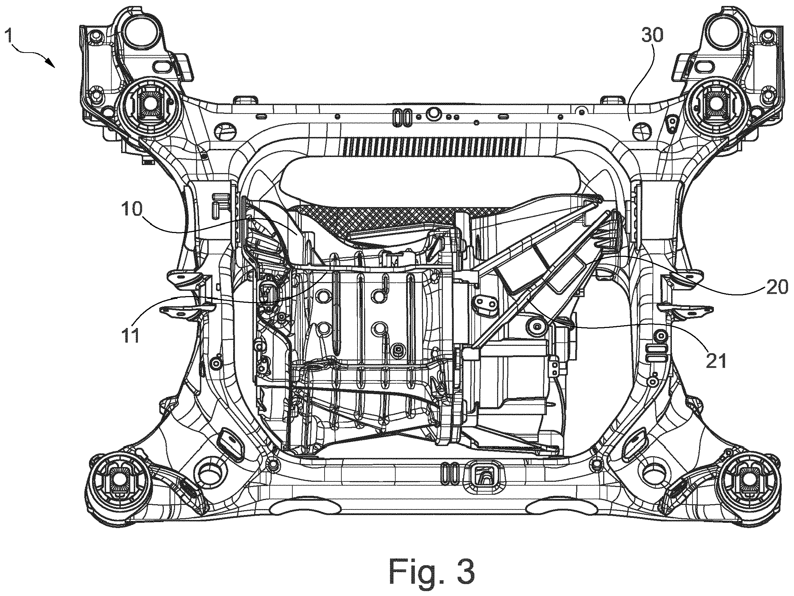

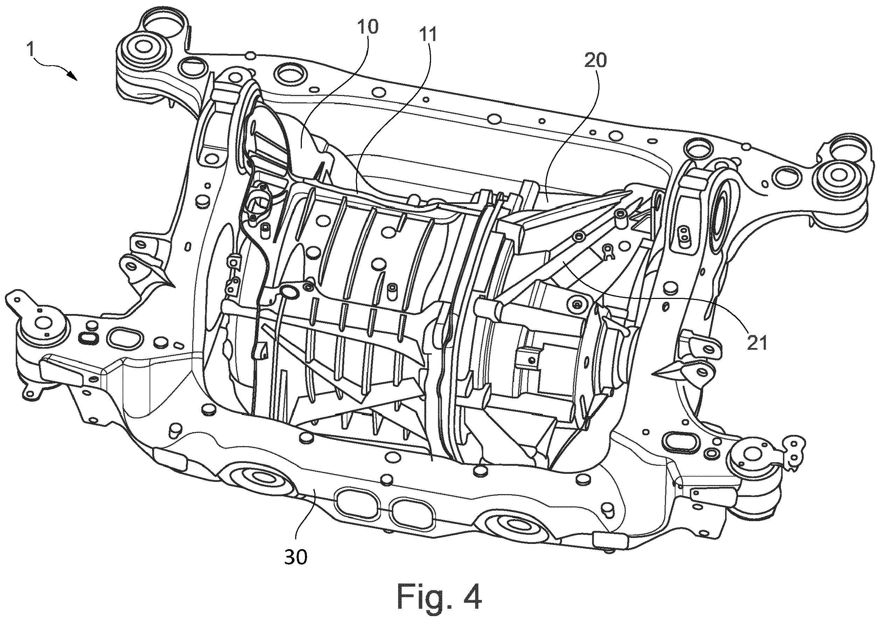

**Figs. 3** **and** **4** show a schematic illustration of a first example of a disclosed motor and transmission assembly 1 in a frame assembly 30 in a first view in **Fig. 3** and in a second view in **Fig. 4**, whereby the motor and transmission assembly 1 comprises a motor unit with a motor housing 10 and a transmission unit with a transmission housing 20, whereby the motor and transmission assembly 1 is mounted in a frame assembly 30 for an axle of a vehicle (not shown). Moreover, the motor housing 10 and the transmission housing 20 are stir welded to each other.

Therefore, for the connection of the motor housing 10 and the transmission housing 20 beside the welded joint, no further connection means are provided in the shown example.

The motor housing 10 comprises, for example, five longitudinal rip elements 11 and the transmission housing 20 comprises, for example, four longitudinal rip elements 21. The five longitudinal rib elements 11 are arranged on the motor housing 10 and the four longitudinal rib elements 21 are arranged on the transmission housing 20.

Moreover, at least one of the four longitudinal rib elements 21 and at least one of the five longitudinal rib element 11 are arranged such that end faces of the longitudinal rib elements 11, 21 are contacting each other.

Further, at least one of the four longitudinal rib elements 21 and at least one of the five longitudinal rib element 11 are connected to each other by a welded joint.

The frame assembly 30 may be at a front axle, an intermediate axle and/or a rear axle of the vehicle.

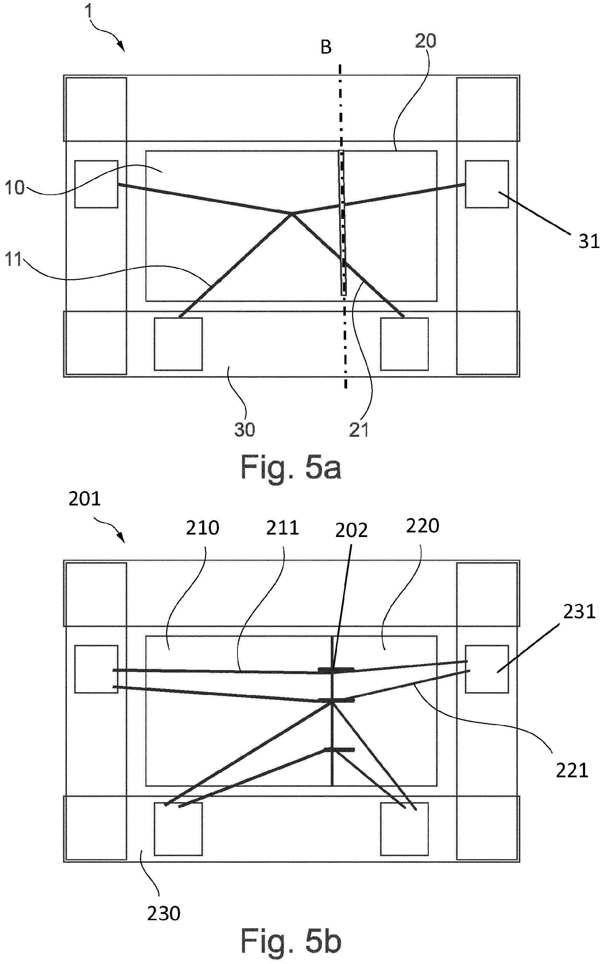

**Fig. 5a** shows a schematic illustration of a second example of a disclosed motor and transmission assembly with a ribbing structure, whereby the motor and transmission assembly 1 comprises a motor unit with a motor housing 10 and a transmission unit with a transmission housing 20, whereby the motor housing 10 and the transmission housing 20 are connected to each other by a welded joint and are housed in a frame assembly 30 for an axle of a vehicle (not shown). The welded joint is schematically shown as an axis B. The motor housing 10 comprises, for example, two longitudinal rib elements 11 and the transmission housing comprises, for example, two longitudinal rib elements 21.

The two longitudinal rip elements 11 and two longitudinal rip elements 21 are each arranged from attachment bushings 31 to a central point of the motor and transmission assembly 1.

Moreover, the two longitudinal rib elements 21 and the two longitudinal rib element 11 are arranged such that end faces of the longitudinal rib elements 11, 21 are contacting each other.

Further, at least one of the two longitudinal rib elements 21 and at least one of the two longitudinal rib element 11 are connected to each other by a welded joint.

Therefore, the two longitudinal rib elements 21 and at least one of the two longitudinal rib element 11 are arranged and configured to build two unitary longitudinal rib elements 11, 21 to reinforce the motor and transmission assembly 1.

Furthermore, the two longitudinal rib elements 21 and at least one of the two longitudinal rib element 11 are formed as two nearly straight longitudinal rib elements 11, 21.

The frame assembly 30 comprises four attachment bushings 31 for connecting the frame assembly 30 to the vehicle, in particular, at a front axle, a rear axle and/or an intermediate axle of the vehicle.

**Fig. 5b** a schematic illustration of an example of a motor housing and a transmission housing with a ribbing structure known from the prior art, whereby the motor and transmission assembly 201 comprises a motor unit with a motor housing 210 and a transmission unit with a transmission housing 220, whereby the motor housing 210 and the transmission housing 220 are connected to each other with three screws 202 and a connection flange and are housed in a frame assembly 230 of a vehicle. The motor housing 210 comprises four longitudinal rib elements 211 and the transmission housing comprises four longitudinal rib elements 221.

Moreover, the screw connection flange comprises three screws for connecting the motor housing 210 to the transmission housing 220.

The frame assembly 230 comprises four attachment bushings 231 for connecting the frame assembly to the vehicle, in particular, at a front axle, an intermediate axle and/or a rear axle of the vehicle.

The four longitudinal rip elements 211 and four longitudinal rip elements 221 are each arranged from attachment bushings 231 to a screw of the connection of the motor housing 210 and the transmission housing 220.

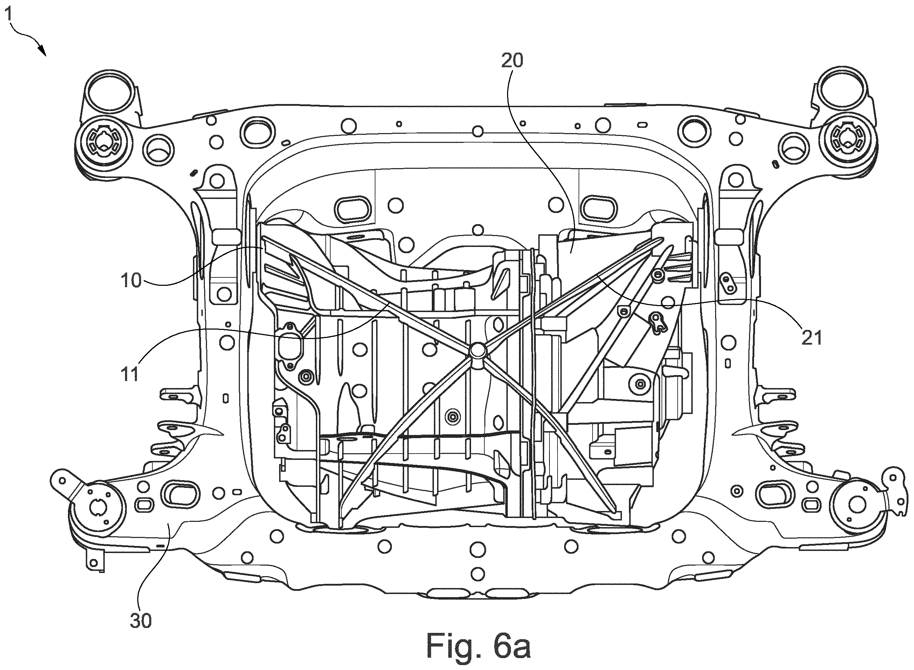

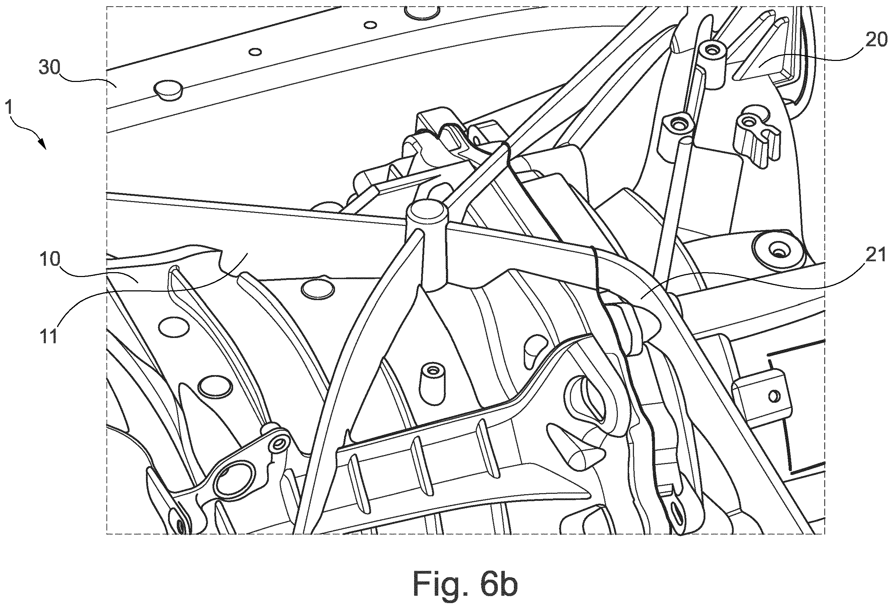

**Fig. 6a** shows a schematic illustration of a first view of the motor and transmission assembly with a ribbing structure according **Fig. 5a****.** Further, **Fig. 6b** shows a schematic illustration of a second view of the motor and transmission assembly with a ribbing structure according **Fig. 5a****.**

The two longitudinal rib elements 21 and the two longitudinal rib element 11 are arranged and configured and are optimized to reinforce the complete motor and transmission assembly 1, instead of being sub optimized to reinforce the motor housing 10 and the transmission housing 20. Moreover, the two longitudinal rib elements 21 and the two longitudinal rib element 11 are configured to act as two complete reinforcement rib elements of the motor and transmission assembly 1.

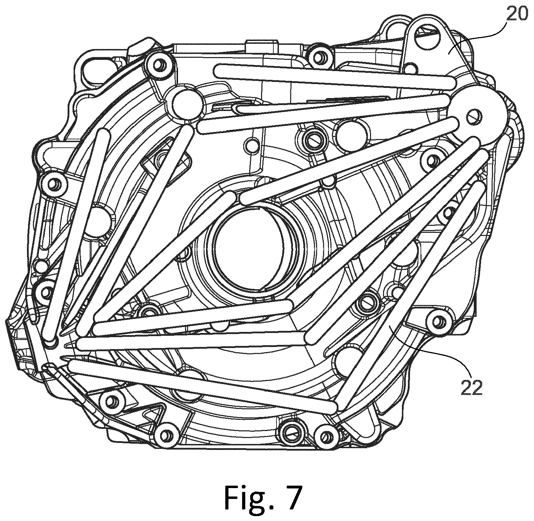

**Fig. 7** shows a schematic illustration of a motor housing or a transmission housing according **Fig. 3** or **Fig. 4** in a side view, whereby the motor housing or the transmission housing 20 comprises, for example, twelve traversal rib elements 22.

Moreover, the twelve traversal ribs 23 are straight, because they do not have to avoid bolts and/or screws.

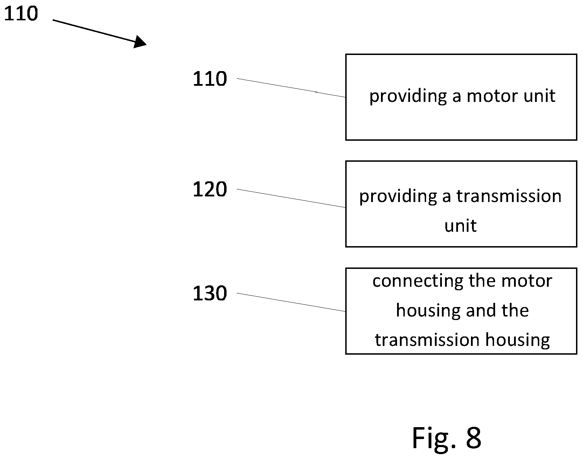

**Fig. 8** shows an example of a method for providing a motor and transmission assembly, whereby the method for providing a motor and transmission assembly 100 comprises:
- providing a motor unit 110 comprising a motor housing;
- providing a transmission unit 120 comprising a transmission housing;
- connecting 130 the motor housing and the transmission housing to each other with a method for forming a non-destructively detachable connection.

Moreover, the non-destructively detachable connection is formed by an adhesive joint and/or a glued joint and/or a soldered joint and/or a welded joint, in particular the welded joint comprising a friction stir welding joint, in the shown examples.

Other variations to the disclosed examples may be understood and effected by those skilled in the art in practicing the claimed subject matter, from the study of the figures, the disclosure, and the appended claims. In particular, respective parts/functions of the respective example described above may also be combined with each other. In particular, the present disclosure is not limited to specific modules, vehicle functions, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 1: motor and transmission assembly
- 10: motor housing
- 11: longitudinal rib element
- 20: transmission housing
- 21: longitudinal rib element
- 22: traversal rib element
- 30: frame assembly
- 31: attachment bushings
- 100: method for providing a motor and transmission assembly
- 110: providing a motor unit
- 120: providing a transmission unit
- 130: connecting
- 201: motor and transmission assembly (prior art)
- 202: connecting screws (prior art)
- 210: motor housing (prior art)
- 211: longitudinal rib element (prior art)
- 220: transmission housing (prior art)
- 221: longitudinal rib element (prior art)
- 222: traversal rib element (prior art)
- 230: frame assembly (prior art)
- 231: attachment bushings (prior art)
- A: axis A
- B: axis B

## Claims

1. Motor and transmission assembly for a vehicle, comprising:
- a motor unit comprising a motor housing (10);
- a transmission unit comprising a transmission housing (20);
- whereby the motor housing (10) and the transmission housing (20) are connected to each other by a non-destructively detachable connection.

2. Motor and transmission assembly according to claim 1, whereby the non-destructive detachable connection is an adhesive joint and/or a glued joint and/or a soldered joint and/or a welded joint, in particular the welded joint comprising a friction stir welding joint connecting the motor housing (10) and the transmission housing (20) to each other.

3. Motor and transmission assembly according to claims 1 or 2, the motor housing (10) and/or the transmission housing (20) comprising at least one rib element (11, 21, 22) configured to reinforce the stability of the motor housing (10) and/or the transmission housing (20).

4. Motor and transmission assembly according to any one of the preceding claims, the motor housing (10) and/or the transmission housing (20) comprising at least one transversal rip element (22) extending in a transversal direction of the motor housing (10) and/or the transmission housing (20).

5. Motor and transmission assembly according to any one of the preceding claims, the motor housing (10) and/or the transmission housing (20) comprising at least one longitudinal rip element (11, 21) extending in a longitudinal direction of the motor housing (10) and/or the transmission housing (20).

6. Motor and transmission assembly according to claim 5, at least one longitudinal rib element (21) of the transmission housing (20) and at least one longitudinal rib element (11) of the motor housing (10) are arranged such that end faces of the longitudinal rib elements (11, 21) are contacting each other.

7. Motor and transmission assembly according to claim 6, the end faces of the longitudinal rib elements (11,21) are connected to each other by a welded joint.

8. Motor and transmission assembly according to claims 6 or 7, whereby the at least one longitudinal rib element (21) of the transmission housing (20) and the at least one longitudinal rib element (11) of the motor housing (10) are arranged and configured to build a unitary longitudinal rib element (11, 21) to reinforce the motor and transmission assembly (1).

9. Motor and transmission assembly according to one of the claims 5 to 8, whereby the at least one longitudinal rib element (21) of the transmission housing (20) and/or the at least one longitudinal rib element (11) of the motor housing (10) are formed as a straight longitudinal rib element (11, 21).

10. Motor and transmission assembly according to any one of the preceding claims, whereby for the connection of the motor housing (10) and the transmission housing (20) beside the non-destructively detachable connection, no further connection means are provided.

11. Vehicle comprising a motor and transmission assembly (1) according to any one of the preceding claims, whereby the motor and transmission assembly (1) is mounted in a frame assembly (30) of the vehicle.

12. Vehicle according to claim 11, whereby the frame assembly (30) is provided at a front axle, intermediate axle and/or a rear axle of the vehicle.

13. Method for providing a motor and transmission assembly, the method comprising:
- providing a motor unit (110) comprising a motor housing (10);
- providing a transmission unit (120) comprising a transmission housing (20);
- connecting (130) the motor housing (10) and the transmission housing (20) to each other with a method for forming a non-destructively detachable connection.

14. Method according to claim 13, whereby the non-destructively detachable connection is provided by an adhesive joint and/or a glued joint and/or a soldered joint and/or a welded joint, in particular the welded joint comprising a friction stir welding joint.
